# EUROPÄISCHE PATENTSCHRIFT

(11) **EP 1 096 116 B1**
(45) Veröffentlichungstag und Bekanntmachung des Hinweises auf die Patenterteilung: **15.09.2004**
(21) Anmeldenummer: 00120240.7
(22) Anmeldetag: 27.09.2000
(51) Int. Cl.: F01N 3/20, B01D 53/94, F01N 1/08, F01N 3/28

(54) **Verfahren und Vorrichtung zur kombinierten katalytischen NOx-Reduktion und Schalldämpfung von Abgas im Abgasstrang einer Brennkraftmaschine**
Method and device for combined catalytic NOx reduction and sound attenuation of exhaust gas in the exhaust line of an internal combustion engine
Procédé et dispositif combinant la réduction catalytique de NOx et l'amortissement de son de gaz d' échappement dans la ligne d'échappement d'un moteur à combustion interne

(30) Priorität: 30.10.1999 DE 19952428
(43) Veröffentlichungstag der Anmeldung: 02.05.2001
(73) Patentinhaber: MAN Nutzfahrzeuge Aktiengesellschaft, 80976 München (DE); ROTH-TECHNIK AUSTRIA Gesellschaft m.b.H., 3193 St. Aegyd/Neuwalde (AT)
(72) Erfinder: Jacob, Eberhard, Dr., 82152 Krailing (DE); Mai, Hans-Peter, 76456 Kuppenheim (DE)

(56) Entgegenhaltungen:
- DE-A- 19 522 935
- DE-U- 9 217 940

## Beschreibung

Die Erfindung betrifft gemäß dem Oberbegriff des Anspruchs 1 eine kombinierte Abgasnachbehandlungs-/Schalldämpfungsvorrichtung und gemäß dem Oberbegriff des Anspruchs 2 ein Verfahren zur kombinierten katalytischen NOₓ-Reduktion und Schaltdämpfung von Abgas im Abgasstrang einer Brennkraftmaschine, insbesondere Dieselmotor eines Nutzfahrzeugs wie Lastkraftwagen, Omnibus.

Aus der EP 0555746 B1 sind ein Verfahren und eine Vorrichtung zur katalytischen NOₓ-Reduktion der Abgase von Brennkraftmaschinen, insbesondere Dieselmotoren bekannt. Dabei wird Harnstoff als Reduktionsmittel in den Abgasstrom eingedüst wird, der dann nacheinander einen Harnstoff-Zersetzungskatalysator und einen NOₓ-Reduktionskatalysator und anschließend gegebenenfalls bzw. erforderlichenfalls auch noch einen NH₃-Sperrkatalysator durchströmt.

Eine Verbesserung dieses Systems wird gemäß der Lehre der DE 197 34 627 C1 durch die Verwendung eines Vorkatalysators erreicht, der dem vorgenannten Katalysatorsystem im Abgasstrang störungsmäßig vorgeschaltet ist. Durch diesen Vorkatalysator wird die NOₓ-Reduktionsfähigkeit des Abgases signifikant erhöht.

Beiden bekannten Systemen ist gemeinsam, daß die Katalysatoren alle in Reihe hintereinander angeordnet sind, damit ein sogenanntes Solosystem bilden. Dabei kann das Katalysator-Solosystem im Abgasstrang einem Schalldämpfer strömungsmäßig und räumlich vorgeordnet sein oder alternativ mit seiner letzten Stufe in den Schalldämpfer hineinragen. Unabhängig davon ist maßgebliches Kriterium eines solchen Katalysator-Solosystems, daß der Schalldämpfer grundsätzlich mit bereits katalytisch gereinigtem Abgas gespeist wird. Nachteilig bei diesem Katalysator-Solosystem ist sein in Längsrichtung des Abgasstranges gesehen relativ großer Platzbedarf. Außerdem ergeben sich - wie Versuche gezeigt haben - bei Abgasvolumenströmen > 500 Nm³/h Probleme hinsichtlich einer gleichmäßigen Verteilung des eingedüsten Reduktionsmittels Harnstoff im Abgasstrom und in den Katalysatoren, da bei einem vorgebenen maximalen Drockvedust - bei Nutzfahrzeugen z. 8. ≤ 100 mbar - die Anströmflache der Katalysatoren in Soloausführung vergleichsweise groß gewählt werden muß, z. B. 380 mm Ø bei ca. 1.500 m³/h Abgasvolumenstrom.

Im Gegensatz zu solchen Solosystemen sind auch schon Modulsysteme bekannt, bei denen eine Katalysator-Einheit in mehrere Einzel-Kat-Module aufgeteilt ist, die vom Abgas durchströmt werden. Ein Beispiel für ein solches Modulsystem ist aus der DE 196 26 980 A1 bekann. Diese offenbart einen Schalldämpfer, der intern durch zwei voneinander beabstandete Zwischenwände in drei Kammern unterteilt ist. Zwischen den beiden Zwischenwänden und gehalten von diesen erstrecken sich mehrere achsparallel zueinander angeordnete Oxidationskatalysatoren. Es wurde nun schon versucht, dieses 3-Kammer-Schalldämpfer-Prinzip mit seinem Oxikat-Modulsystem in Verbindung mit Katalysatoren für eine katalytische NOₓ-Reduktion und mit Harnstoff als Reduktionsmittel darzustellen. Es hat sich aber herausgestellt, daß dieses 3-Kammer-challdämpfer-Prinzip insofern nachteilig ist, weil sich Ablagerungen von Harnstoff und Harnstoffzersetzungsprodukten ergeben, die die Lebensdauer des Systems erheblich reduzieren würden.

Es ist daher Aufgabe der Erfindung, ein Verfahren und eine Vorrichtung zur Durchführung dieses Verfahrens zu schaffen, das bzw. die auf engstem Raum eine hochwirksame katalytische NOₓ-Reduktion und Schalldämpfung der Abgase ohne die Gefahr schädlicher Ablagerungen im Schalldämpfer ermöglicht.

Diese Aufgabe ist erfindungsgemäß durch das im Anspruch 2 angegebene Verfahren und durch die im Anspruch 1 angegebene Vorrichtung, die eine Durchführung dieses Verfahrens ermöglicht, gelöst.

Vorteilhafte Ausgestaltungen, Weiterbildungen und Details der erfindungsgemäßen Vorrichtung sind in den abhängigen Unteransprüchen 3 bis 20 angegeben.

Die erfindungsgemäße Vorrichtung erweist sich in verschiedener Weise als sehr vorteilhaft. Sie ist äußerst kompakt und daher sehr gut geeignet für eine Unterbringung z. B. in den üblicherweise sehr beengten Räumlichkeiten eines Lastkraftwagens oder Omnibusses. Aus Sicht der -Schalldämpfer-funktion sind als besonders günstig hervorzuheben die volumenspezifisch hohe akustische Aktivität und der niedrige Druckverlust. Aus Sicht der Abgasnachbehandlungs-Funktion ist z. B. die hohe Effizienz hervorzuheben, die sich aus dem Merkmal ergibt, daß in die Einströmkammer des Schalldämpfers schon mittels des Hamstoff Zersetzungskatalysator für die anschließende NOₓ-Reduktion bestens aufbereitetes Abgas eingeleitet wird. Da die Einströmkammer des Schalldämpfers relativ großvolumig ist, kann sich das eingeleitete Abgas darin auch strömungs- und schalldämmungsmäßig günstig entspannen. Die Unterteilung der NOₓ-Reduktionskatalysator-Einheit in mehrere NOₓ-Kat-Module wiederum ermöglicht eine sehr gleichmäßige Verteilung des Abgases und günstige Durchströmung mit der Folge einer hochwirksamen NOₓ-Reduktion. Dadurch, daß die NOₓ-Kat-Module sich größtenteils innerhalb der Einströmkammer erstrecken, werden diese auch von außen her auf einem vergleichsweise hohen Temperaturniveau gehalten, was zwangsläufig den internen Prozess der NOₓ-Reduktion begünstigt und außerdem die Gefahr des Festsetzens von Ablagerungen innen wie außen erheblich reduziert. Dadurch, daß das Abgas nach Durchströmen der NOₓ-Kat-Module nicht direkt aus dem Schalldämpfer abgeleitet, sondern zunächst in die vordere Ausströmkammer ausgeleitet wird, kann strömungs- und schalldämmungsmäßig eine weitere Beruhigung des Abgases erzielt werden mit dem Ergebnis, daß sich im Vergleich zu herkömmlichen Systemen ein um einige dbA niedrigerer abgestrahlter Geräuschpegel einstellt. Die Modulbauweise der NOₓ-Kats ermöglicht es aber auch, soweit Bedarf oder die Notwendigkeit besteht, einen oder mehrere NH₃-Sperrkatalysator(en) platzsparend im Bereich des Schalldämpfers unterzubringen. Das erfindungsgemäße System zeichnet sich auch durch eine hohe Wirtschaftlichkeit aus, weil es die Verwendung handelsüblicher und damit serienmäßiger Katalysatoren (Vollkats oder beschichtete metallische Monolithen) ermöglicht Zu erwähnen sind als Vorteile auch noch die hohe mechanische Standfestigkeit des erfindungsgemäßen Systems und die Tatsache, daß dieses sowohl im Bereich des Harnstoff-Zersetzungskatatysators als auch im Bereich der Noₓ-Kat-module eine optimale Anpassung des Kat-Volumens an die zugeordnete Brennkraftmaschine, deren Motorteistung und auszustoßende Abgasmenge ermöglicht.

Nachstehend sind das erfindungsgemäße Verfahren und die erfindungsgemäße Vorrichtung anhand der Zeichnung noch näher erläutert. In der Zeichnung zeigen:
Fig. 1 und 2 schematisch je eine Schnittdarstellung eines ersten Ausführungsbeispiels der erfindungsgemäßen Vorrichtung,
Fig. 3 und 4 schematisch je eine Schnittdarstellung eines zweiten Ausführungsbeispiels der erfindungsgemäßen Vorrichtung,
Fig. 5 und 6 schematisch je eine Schnittdarstellung eines dritten Ausführungsbeispiels der erfindungsgemäßen Vorrichtung, und
Fig. 7 und 8 schematisch je eine Schnittdarstellung eines vierten Ausführungsbeispiels der erfindungsgemäßen Vorrichtung.

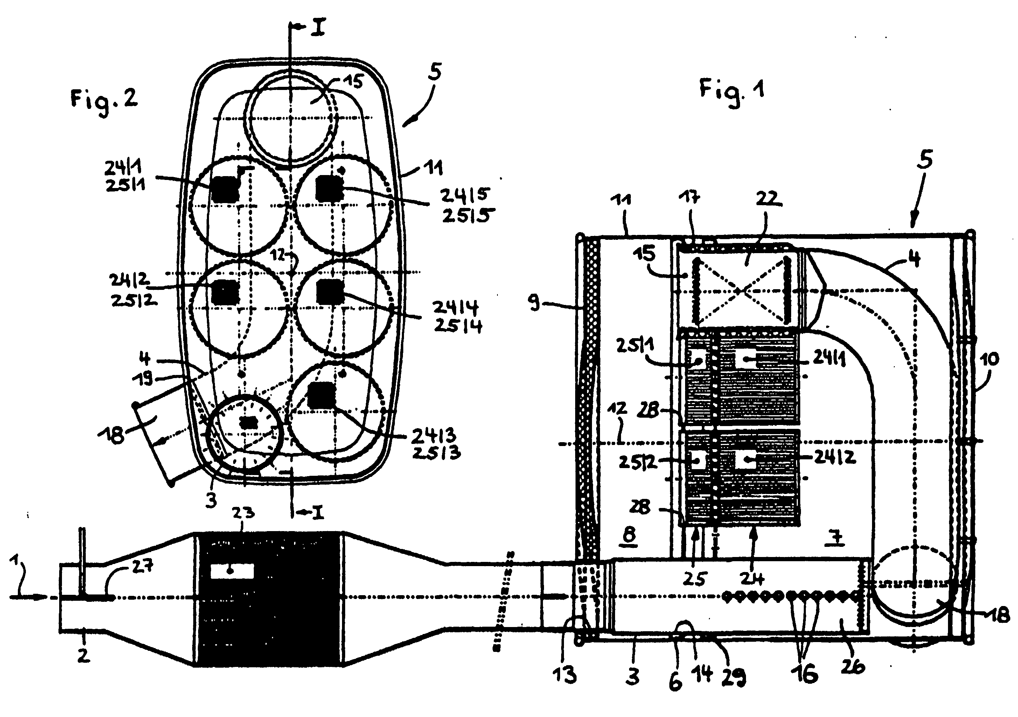

In der Zeichnung gibt der Pfeil 1 die Flußrichtung des Abgases an, welches von einer nicht dargestellten Brennkraftmaschine in einen Abgasstrang ausgestoßen wird. Bei der Brennkraftmaschine kann es sich z. B. um einen Ottomotor oder Dieselmotor handeln, der die Antriebsquelle z. B. in einem Kraftfahrzeug wie Pkw, oder Nutzfahrzeug wie Lastkraftwagen, Omnibus, Gabelstapler, oder Off road-Fahrzeug, oder Schienenfahrzeug, oder Wasserfahr zeug, oder landwirtschaftlichem Fahrzeug wie Traktor, Mähdrescher, oder militärischem Fahrzeug wie Ketten- oder Radpanzer, oder Notstromaggregat, Blockheizkraftwerk oder einer sonstigen Kraftwerksanlage bildet. Im Abgasstrang kann in dessen noch motornahem Bereich ein Vorkatatysator (nicht dargestellt) angeordnet sein, der dazu dient die NOₓ-Reduktonsfähigkeit des Abgases zu erhöhen. Mit 2 ist in Fig. 1, 2 ein Rohrabschnitt im Abgasstrang bezeichnet, an den sich ein weiterer Rohrabschnitt anschließt, der nachfolgend als Abgaseintrittsrohr 3 bezeichnet ist. Mit 4 ist ein Abgasaustrittsrohr und mit 5 insgesamt ein spezieller Schalldämpfer bezeichnet Dieser Schalldämpfer 5 ist erfindungsgemäß tonnenförmig ausgebildet und intern durch eine Zwischenwand 6 in eine hintere Einströmkammer 7 und eine vordere Ausströmkammer 8 unterteilt. Dieser tonnenförmige Schalldämpfer 5 weist in den dargestellten Beispielen einen etwa rechteckigen Querschnitt auf (siehe Fig. 2, 4, 6, 8) und ist durch eine vordere Stirnwand 9, eine hintere Stirnwand 10 und umfänglich durch eine etwa zylindrische Außenwand 11 begrenzt. Die Zwischenwand 6 unterteilt den Innenraum des Schalldämpfers 5 bevorzugt so, daß die axiale Länge der Emströmkammer 7 größer/gleich der Länge der Ausströmkammer 8 ist. Die beiden Stirnwände 9, 10 und die Zwischenwand 6 sind etwa parallel zueinander verlaufend und senkrecht stehend zur Längsachse 12 des Schalldämpfers 5 angeordnet. Die Zwischenwand 6 ist gasdicht mit der Außenwand 11 verbunden.

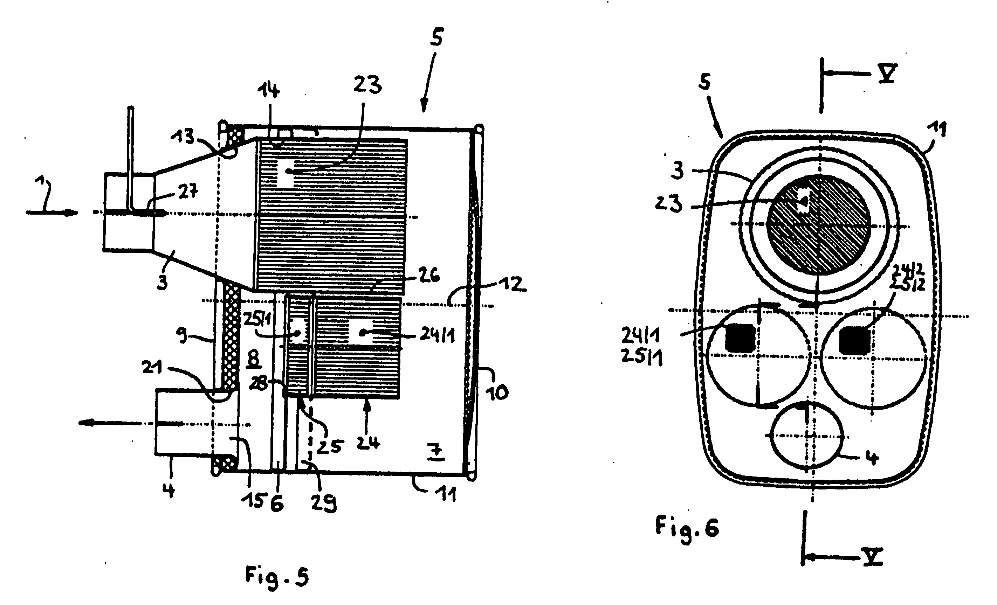

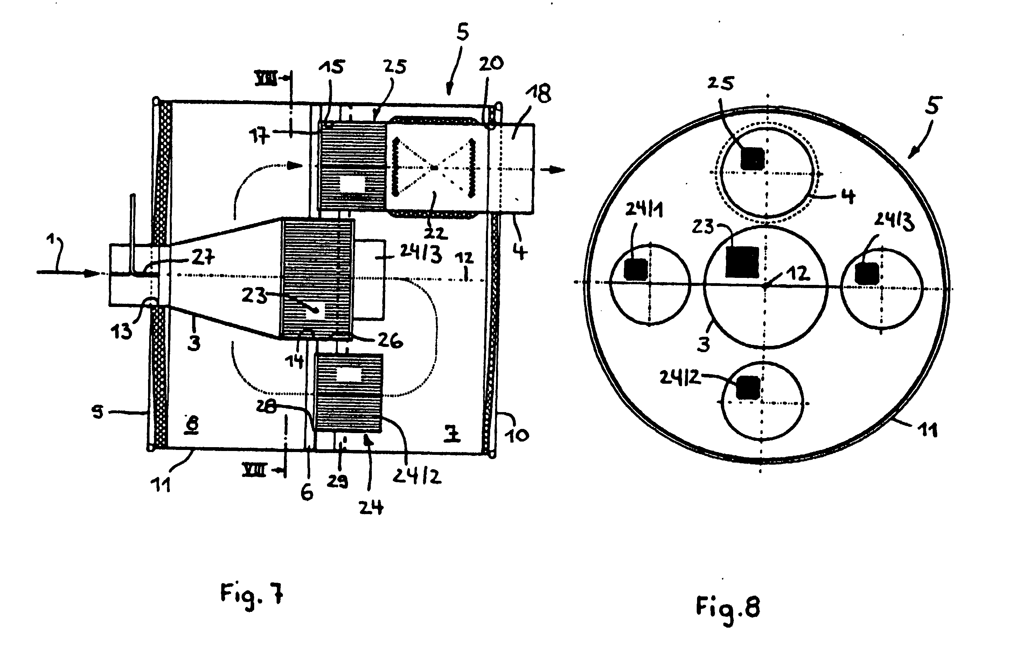

Das Abgaseintrittsrohr 3 ist erfindungsgemäß entweder koaxial (siehe Fig. 7, 8) oder achsparallel (siehe Fig. 1 bis 6) zur Längsachse 12 des Schalldämpfers 5 in diesen hineingeführt, durchdringt dabei dessen vordere Ausströmkammer 8 und mündet in die dahinter angeordnete Einströmkammer 7 aus. Im Fall der Ausführungsbeispiele gemäß Fig. 1, 2 und 3, 4 ist das Abgaseintrittsrohr 3 achsparallel zur Längsachse 12 des Schalldämpfers 5 in einem unteren Bereich in diesen, nahe zu dessen Außenwand 11 hingerückt, hineingeführt. Im Fall des Ausführungsbeispiels gemäß Fig. 5, 6 dagegen ist das Abgaseintrittsrohr 3 zwar auch achsparallel zur Längsachse 12 des Schalldämpfers 5, aber in einem oberen Bereich in diesen, nahe zu dessen Außenwand 11 hingerückt, hineingeführt. Im Fall des Ausführungsbeispiels gemäß Fig. 7, 8 ist das Abgaseintrittsrohr 3 koaxial zur Längsachse 12 des Schalldämpfers 5, also zentral in diesen hineingeführt. In allen Fällen ist das Abgaseintrittsrohr 3 durch eine Öffnung 13 in der vorderen Schalldämpfer-Stirnwand 9 sowie durch eine Offnung 14 in der Zwischenwand 6 hindurch geführt und in jeder der beiden Öffnungen 13, 14 umfangsseitig gasdicht lagefixiert befestigt.

Entsprechend einem weiteren Merkmal der erfindungsgemäßen Vorrichtung ist der mit der Ausströmkammer 8 kommunizierende, koaxial zur Schalldämpfer-Längsachse 12 verlaufende Eintrittsbereich 15 des Abgasaustrittsrohres 4 nahe zur umfänglichen Außenwand 11 hingerückt angeordnet. Im Fall der Ausführungsformen gemäß Fig. 1, 2 und 3, 4 ist dabei der Eintrittsbereich 15 des Abgasaustrittsrohres 4 so weit wie möglich vom Abgaseintrittsrohr 3 beabstandet, an einem diesem gegenüberliegenden Bereich des Schalldämpfers 5, zu dessen Außenwand 11 hingerückt, angeordnet. Im Fall des Ausführungsbeispiels gemäß Fig. 1, 2 ist die Wand des Abgaseintrittsrohres 3 im Bereich hinter der Zwischenwand 6, also im Bereich der Einströmkammer 7 partiell durch Löcher 16 perforiert, was zusätzlich zum stimseitigen auch einen seitlichen Abgasaustritt ermöglicht und einer Vergleichmäßigung des Abgases innerhalb der Einströmkammer 7 dient.

Das Abgasaustrittsrohr 4 ist im Fall der Beispiele gemäß Fig. 1, 2, und 3, 4 und 7, 8 mit seinem Eintrittsbereich 15 umfangsseitig gasdicht in einer Öffnung 17 der Zwischenwand 6 befestigt. Das Abgasaustrittsrohr 4 erstreckt sich hinter dieser Befestigungsstelle durch die Einströmkammer 7 hindurch, im Fall gemäß Fig. 1, 2 und 3, 4 bogenförmig gekrümmt und austrittseitig abgewinkelt, im Fall gemäß Fig. 7, 8 dagegen geradlinig achsparallel zur Schalldämpfer-Längsachse 12, und tritt dann im hinteren Bereich des Schalldämpfers 5 aus diesem entweder seitlich durch dessen Außenwand 11 (siehe Fig. 1, 2 und 3, 4) oder rückwärtig durch die hintere Stirnwand 10 (siehe Fig. 7, 8) aus. Das Abgasaustrittsrohr 4 ist dabei mit seinem Austrittsbereich 18 durch eine entsprechende Öffnung 19 in der Außenwand 11, die nahe zur hinteren Stirnwand 11 hingerückt in dieser ausgebildet ist (Fig. 1, 2 und 3, 4), oder durch eine entsprechende Öffnung 20 in der hinteren Stirnwand 10 (Fig. 7, 8) hindurchgeführt und in der besagten Öffnung 19 bzw. 20 umfangsseitig gasdicht lagefixiert befestigt. Im Fall des Ausführungsbeispiels gemäß Fig. 5, 6 dagegen ist das Abgasaustrittsrohr 4 achsparallel zur Längsachse 12 des Schalldämpfers 5 nach vorne aus diesem herausgeführt, durchdringt dabei mit seinem Eintrittsbereich 15 eine nahe zur Außenwand 11 hingerückt in der vorderen Stirnwand 9 ausgebildete Öffnung 21 und ist in dieser umfangsseitig gasdicht lagefixiert befestigt.

Das Abgasaustrittsrohr 4 kann im Bereich innerhalb des Schalldämpfers 5 eine Endrohrabsorptionseinrichtung 22 aufweisen.

In Kombination mit dem speziell gestalteten Schalldämpfer 5 und seiner speziellen inneren Abgasführung kommt erfindungsgemäß eine spezielle Abgasnachbehandlungsvorrichtung zur Anwendung.

Diese Abgasnachbehandlungsvorrichtung besteht aus einer Vorrichtung zur katalytischen NOₓ-Redukion, die einen mit Harnstoff als Reduktionsmittel beaufschlagbaren Harnstoff-Zersetzungskatalysator 23 und eine NOₓ-Reduktionskatalysator-Einheit 24 aufweist, der gegebenenfalls oder erforderlichenfalls eine NH₃-Sperrkatalysator-Einheit 25 nachgeordnet ist.

Der mit Harnstoff als Reduktionsmittel beaufschlagbare, als Verdampfer für das zugeführte Reduktionsmittel, Strömungsmischer, Hydrolyse- und NOₓ-Reduktionskatalysator fungierende Harnstoff-Zersetzungskatalysator 23 kann im Abgasstrang entweder außerhalb des Schalldämpfers 5 z. B. im Rohrabschnitt 2 (siehe Fig. 1, 2) oder innerhalb des Schalldämpfers 5, dort im austrittsseitigen Endbereich 26 des Abgaseintrittsrohres 3 angeordnet sein. Das Reduktionsmittel - Harnstoff in fester oder flüssiger, gelöster Form - wird mittels einer Düse 27 von einer dieser vorgeschalteten Harnstoffdosiereinrichtung gesteuert in den Abgasstrang unmittelbar vor dem Harnstoff-Zersetzungskatalysator 23 eingespeist.

Die dem Harnstoff-Zersetzungskatalysator 23 strömungsmäßig und funktionell nachgeordnete NOₓ-Reduktionskatalysator-Einheit 24 ist entsprechend der Erfindung in mehrere einzelne NOₓ-Kat-Module 24/1 bis 24/n aufgeteilt. Diese erstrecken sich achsparallel zur Längsachse 12 des Schalldämpfers 5 und sind in diesem, dort innerhalb der Einströmkammer 7 im Freiraum zwischen Abgaseintrittsrohr 3 und Abgasaustrittsrohr 4 verteilt angeordnet.

Die NOₓ-Kat-Module 24/1 bis 24/n werden von der Einströmkammer 7 her, also von hinten nach vorne zur vorderen Ausströmkammer 8 hin, mit Abgas durchströmt.

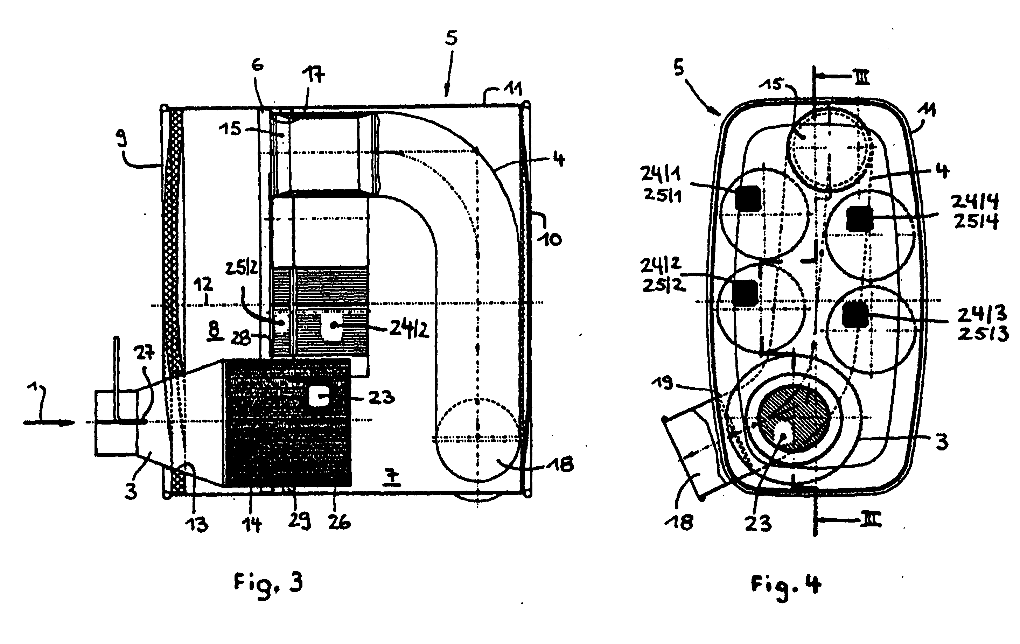

Im Fall des Beispiels gemäß Fig. 1, 2 sind fünf, bei Fig. 3, 4 vier, bei Fig. 5, 6 zwei und bei Fig. 7, 8 drei solcher NOₓ-Kat-Module 24/1 bis 24/n vorgesehen.

Diese NOₓ-Kat-Module 24/1 bis 24/n sind jeweils an der Zwischenwand 6 befestigt. Hierzu ist jeder NOₓ-Kat-Modul mit dem vorderen Endbereich seines Gehäuses in einer entsprechenden Öffnung 28 in der Zwischenwand 6 aufgenommen und dort umfangsseitig gasdicht lagefixiert befestigt.

Sofern eine NH₃-Sperrkatalysator-Einheit 25 vorgesehen ist, wie in allen dargestellten Ausführungsbeispielen, so gibt es auch hierfür verschiedene Anordnungs- und Aufteilungsvorschläge. Im Fall der Beispiele gemäß Fig. 1, 2 und 3, 4 und 5, 6 ist die NH₃-Sperrkatatysator-Einheit 25 in mehrere einzelne NH₃-Kat-Module 25/1 bis 25/n aufgeteilt, von denen jeder einem NOₓ₋Kat-Modut 24/1 bis 24/n zugeordnet und diesem innerhalb seines Gehäuses strömungsmäßig nachgeordnet ist. Die Anzahl der je Beispiel verwendeten NH₃-Sperrkat-Module entspricht demnach der Anzahl der verwendeten NOₓ-Kat-Module 24/1 bis 24/n je Fall. Im Beispiel gemäß Fig. 7, 8 dagegen ist nur ein einziger NH₃-Sperrkat-Modul 25 vorgesehen, der dort im Eintrittsbereich 15 des Abgasaustrittsrohres 4 angeordnet ist.

Die NOₓ-Reduktionskatalysatoren 24/1 bis 24/n und der/die NH₃-Sperrkatalysator(en) sind entweder durch beschichtete metallische Monolithen mit einer hohen Anzahl - beispielsweise 200 bis 1.600 cpsi - von parallel zueinander durchströmten Kanälen oder durch Vollkatalysatoren mit beispielsweise 200 bis 400 cpsi Zelldichte gebildet, wobei deren Aktivität durch Imprägnierung mit Platin generiert wird.

Nachfolgend noch einige Anmerkungen zu Details, die die Funktionsfähigkeit der kombinierten Abgasnachbehandlungs-/Schalldämpfervorrichtung sowie deren Lebensdauer positiv beeinflussen.

Je nach Material und dessen Oberflächenbeschaffenheit, aus dem die Stirnwände 9, 10, die Außenwand 11 und die Zwischenwand 6 hergestellt sind, kann es sich als zweckmäßig erweisen, jene Innenwandbereiche, die die Einströmkammer 7 begrenzen und somit an sich ablagerungsgefährdet wären, mit einer Al₂O₃-Schutzschict zu versehen. Zusätzlich können besonders ablagerungsgefährdete Innenwandsektionen der Einströmkammer 7 auch noch mit einem aus einer Abmischung von TiO₂, Al₂O₃ und SiO₂ bestehenden Material beschichtet werden.

Soweit es sich aus Festigkeitsgründen und Stabilitätsgründen als notwendig oder zweckmäßig erweist, kann im Schalldämpfer 5 - wie in den Beispielen dargestellt - innerhalb der Einströmkammer 7 eine parallel und beabstandet zur Zwischenwand 6 angeordnete sowie mit der Schalldämpfer-Außenwand 11 verbundene, viellochig perforierte Stützwand 29 vörgesehen sein. Diese Stützwand 29 weist zu den Öffnungen der Zwischenwand 6 koaxial fluchiende Öffnungen auf, durch die das Abgaseintrittsrohr 3, die NOₓ₋Kat-Module 24/1 bis 24/n mit ihren Gehäusen und in Fällen der Fig. 1, 2 sowie 3, 4 und 7, 8 auch das Abgasaustrittsrohr 4 mit seinem Eintrittsbereich hindurchgeführt und dann umfangsseitig befestigt sind.

Um eine besonders hohe Schalldämmungswirkung zu erzielen, können die vordere Stimwand 9 und die hintere Stirnwand 10 des Schalldämpfers 5 jeweils durch Doppelbleche (wie dargestellt) gebildet und gegebenenfalls durch Ausfüllen des Zwischenraumes zwischen den Doppelblechen mit Edelstahlwolle, Basaltsteinwolle oder dergleichen Dämmaterial zusätzlich entdröhnt sein.

Außerdem können die vordere Stirnwand 9 und die hintere Stirnwand 10 des Schalldämpfers 5 zur Erhöhung von dessen Formstabilität Bombierungen (wie dargestellt) aufweisen.

Unter Verwendung einer kombinierten Abgasnachbehandlungs-/Schalldämpfervorrichtung der vorbeschriebenen Art läßt sich das nachfolgend beschriebene erfindungsgemäße Verfahren zur kombinierten katalytischen NOₓ-Reduktion und Schalldämpfung im Abgasstrang einer Brennkraftmaschine durchführen.

Dieses Verfahren kennzeichnet sich dadurch, daß zunächst in das von der Brennkraftmaschine kommende, gegebenenfalls schon durch einen Voroxidationskatalysator hindurchgeleitete Abgas als Reduktionsmittel Harnstoff in fester oder flüssiger, gelöster Form mittels der Düse 27 eingedüst wird. Dieses solchermaßen dotierte Abgas wird dann durch den als Verdampfer für das Reduktionsmittel, Strömungsmischer, Hydrolyse- und NOₓ-Reduktionskatalysator fungierenden Harnstoff-Zersetzungskatalysator 23 hindurchgeleitet und dem Schalldämpfer 5 zugeführt. Dabei wird das Abgas innerhalb des Schalldämpfers 5 kanalisiert mittels des Abgaseintrittsrohres 3 durch dessen vordere Ausströmkammer 8 hindurchgeleitet.

Dann wird das wie vorstehend angegeben aufbereitete Abgas aus dem Abgaseintrittsrohr 3 ausgeleitet und in die hintere Einströmkammer 7 eingespeist, wo es strömungsmäßig und schalldämmungsmäßig beruhigt wird. Anschließend wird dieses aufbereitete Abgas aus der Einströmkammer 7 verteilt auf die einzelnen NOₓ-Reduktionskatalysator-Module 24/1 bis 24/n durch diese hindurch in die vordere Ausströmkammer 8 zurückgeleitet. In dieser wird das solchermaßen NOₓ-reduzierte Abgas nochmals strömungsmäßig und schalldämmungsmäßig beruhigt. Vor oder nach dem Eintritt in die Ausströmkammer 8 kann das Abgas auch noch durch wenigstens einen NH₃-Sperrkatalysator 25, 25/1 bis 25/n, soweit diese(r) vorhanden, hindurchgeleitet werden. Zuletzt wird das katalytisch gereinigte Abgas durch das Abgasaustrittsrohr 4 kanalisiert aus dem Schalldämpfer 5 wieder ausgeleitet.

## Patentansprüche

1. Kombinierte Abgasnachbehandlungs-/Schalldämpfungsvorrichtung im Abgasstrang einer Brennkraftmaschine, insbesondere Dieselmotor eines Nutzfahrzeugs wie Lastkraftwagen, Omnibus, mit
- einer Vorrichtung zur katalytischen NOₓ-Reduktion umfassend einen mit Harnstoff als Reduktionsmittel beaufschlagbaren Hamstoff-Zersetzungskatalysator, eine NOₓ-Reduktionskatalysator-Einheit und gegebenenfalls dieser nachgeordnet eine NH₃-Sperrkatalysator-Einheit, und
- einem Schalldämpfer, in den ein Abgaseintrittsrohr hineinführt und aus dem ein Abgasaustnttsrohf herausführt,
**gekennzeichnet durch** die Kombination eines speziell gestalteten Schalldämpfers (5) mit einer speziellen Abgasführung darin und einer speziellen Anordnung der Katalysatoren, dergestalt:
- der Schalldämpfer (5) ist tonnenförmig ausgebildet und intern **durch** eine Zwischenwand (6) in eine hintere Einströmkammer (7) sowie eine vordere Ausströmkammer (8) unterteilt,
- das Abgaseintrittsrohr (3) ist koaxial oder achsparallel zur Längsachse (12) des Schalldämpfers (5) in diesen hineingeführt, durchdringt dessen vordere Ausströmkammer (8) und mündet in die dahinter angeordnete Einströmkammer (7) aus,
- der mit der Ausströmkammer (8) kommunizierende, koaxial zur Schalldämpfer-Längsachse (12) verlaufende Eintrittsbereich (15) des Abgasaustrittsrohres (4) ist nahe bei der umfänglichen Schalldämpfer-Außenwand (11) angeordnet,
- die NOₓ-Reduktionskatalysator-Einheit (24) ist in mehrere einzelne NOₓ-Kat-Module (24/1 .... 24/n) aufgeteilt, die sich achsparallel zur Shalldämpfer-Längsachse (12) erstrecken, innerhalb der Einströmkammer (7) im Freiraum zwischen Abgaseintrittsrohr (3) und Abgasaustrittsrohr (4) verteilt angeordnet, von hinten nach vorn zur Ausströmkammer (8) hin zu durchströmen und an der Zwischenwand (6) befestigt sind.

2. Verfahren zur kombinierten katatytischen NOₓ-Reduktion und Schalldämpfung von Abgas im Abgasstrang einer Brennkraftmaschine, insbesondere Dieselmotor eines Nutzfahrzeugs wie Lastkraftwagen, Omnibus, **dadurch gekennzeichnet, daß** in das von der Brennkraftmaschine kommende, gegebenenfalls zur Erhöhung der NOₓ-Reduktionsfähigkeit schon durch einen Voroxidationskatalysator hindurchgeleitete Abgas zunächst als Reduktionsmittel Harnstoff in fester oder flüssiger, gelöster Form eingedüst wird, dann dieses solchermaßen dotierte Abgas durch einen als Verdampfer, Strömungsmischer, Hydrolyse- und NOₓ-Reduktionskatalysator fungierenden Harnstoff-Zersetzungskatatyator (23) hindurchgeleitet und einem Schalldämpfer (5) zugeführt wird, dabei in diesem kanalisiert mittels eines Abgaseintrittsrohres (3) durch eine vordere Ausströmkammer (8) hindurchgeleitet und in eine hintere Einströmkammer (7) eingespeist und dort schalldämmungsmäßig sowie strömungsmäßig beruhigt wird, dann verteilt auf mehrere NOₓ-Reduktionskatalysator-Module (24/1 .... 24/n) durch diese hindurch in die vordere Ausströmkammer (8) rückgeleitet und dort wiederum schalldämpfungsmäßig sowie strömungsmäßig beruhigt wird, vor oder nach dem Eintritt in die Ausströmkammer (8) gegebenenfalls noch durch wenigstens einen NH₃-Sperrkatalysator (25; 25/1 .... 25/n) hindurchgeleitet, und schließlich katalytisch gereinigt durch ein Abgasaustrittsrohr (4) kanalisiert aus dem Schalldämpfer (5) wieder ausgeleitet wird.

3. Kombinierte Abgasnachbehandlungs-/Schalldämpfungsvorrichtung nach Anspruch 1, **dadurch gekennzeichnet, daß** der mit Harnstoff als Reduktionsmittel beaufschlagbare, als Verdampfer für das zugeführte Reduktionsmittel, Strömungsmischer, Hydrolyse- und NOₓ-Reduktionskatalysator fungierende Harnstoff-Zersetzungskatalysator (23) im Abgasstrang strömungsmäßig vor dem Schalldämpfer (5) angeordnet ist.

4. Kombinierte Abgasnachbehandlungs-/Schalldämpfungsvorrichtung nach Anspruch 1, **dadurch gekennzeichnet, daß** der mit Harnstoff als Reduktionsmittel beaufschlagbare, als Verdampfer für das zugeführte Reduktionsmittel, Strömungsmischer, Hydrolyse- und NOₓ-Reduktionskatalysator fungierende Harnstoff-Zersetzungskatalysator (23) im Schalldämpfer (5), dort innerhalb des austrittsseitigen Endbereiches (26) des Abgaseintrittsrohres (3) angeordnet ist.

5. Kombinierte Abgasnachbehandlungs-/Schalldämpfungsvorrichtung nach Anspruch 1, **dadurch gekennzeichnet, daß** ein NH₃-Sperrkat-Modul (25) im Eintrittsbereich (15) des Abgasaustrittsrohres (4) angeordnet ist.

6. Kombinierte Abgasnachbehandlungs-/Schalldämpfungsvorrichtung nach Anspruch 1, **dadurch gekennzeichnet, daß** die NH₃-Sperrkatalysator-Einheit (25) in mehrere einzelne NH₃-Sperrkat-Module (25/1 .... 25/n) aufgeteilt ist, von denen jeder einem NOₓ-Kat-Modul (24/1 .... 24/n) zugeordnet und diesem innerhalb seines Gehäuses strömungsmäßig nachgeordnet ist.

7. Kombinierte Abgasnachbehandlungs-/Schalldämpfungsvorrichtung nach Anspruch 1, **dadurch gekennzeichnet, daß** der tonnenförmige Schalldämpfer (5) einen etwa rechteckkigen Querschnitt, eine etwa zylindrische Außenwand (11), eine vordere Stirnwand (9) und eine hintere Stirnwand (10) aufweist, daß die Zwischenwand (6) und die beiden Stirnwände (9, 10) etwa parallel zueinander angeordnet sind, daß die Zwischenwand (6) gasdicht mit der Außenwand (11) verbunden ist, und daß das Abgaseintrittsrohr (3) und die Gehäuse der NOₓ-Kat-Module (24/1 .... 24/n) in Öffnungen (14, 17, 28) der Zwischenwand (6), umfangsseitig gasdicht dann, lagefixiert befestigt sind.

8. Kombinierte Abgasnachbehandlungs-/Schalldämpfungsvorrichtung nach Anspruch 7, **dadurch gekennzeichnet, daß** das Abgaseintrittsrohr (3) durch eine Öffnung (13) in der vorderen Stirnwand (9) des Schalldämpfers (5) sowie durch eine Öffnung (14) in der Zwischenwand (6) hindurchgeführt und in jeder der beiden Öffnungen (13, 14) umfangsseitig gasdicht lagefixiert ist.

9. Kombinierte Abgasnachbehandlungs-/Schalldämpfungsvorrichtung nach Anspruch 1, **dadurch gekennzeichnet, daß** das Abgasaustrittsrohr (4) mit seinem Eintrittsbereich (15) umfangsseitig gasdicht in einer Öffnung (17) der Zwischenwand (6) befestigt ist, sich anschließend durch die Einströmkammer (7) hindurch erstreckt und im hinteren Bereich des Schalldämpfers (5) aus diesem entweder durch dessen Außenwand (11) oder durch die hintere Stirnwand (10), umfangsseitig gasdicht in einer entsprechenden Öffnung (19, 20) fixiert, herausgeführt ist

10. Kombinierte Abgasnchbehandlungs-/Schalldämpfungsvorrichtung nach Anspruch 1, **dadurch gekennzeichnet, daß** das Abgasaustrittsrohr (4) nach vorne aus dem Schalldämpfer (5) herausgeführt ist, mit seinem Eintrittsbereich (15) eine Öffnung (21) in der vorderen Stirnwand (9) durchdringt und in dieser Öffnung (21) umfangsseitig gasdicht lagefixiert befestigt ist.

11. Kombinierte Abgasnachbehandlungs-/Schalldämpfungsvorrichtung nach Anspruch 1, **dadurch gekennzeichnet, daß** das Abgaseintrittsrohr (3) achsparallel zur Längsachse (12) des Schalldämpfers (5) in einem unteren oder oberen Bereich in diesen, nahe zu dessen Außenwand (11) hingerückt, hineingeführt ist, und daß der koaxial zur Längsachse (12) des Schalldämpfers (5) verlaufende Eintrittsbereich (15) des Abgasaustrittsrohres (4) so weit wie möglich vom Abgaseintrittsrohr (3) beabstandet, an einem diesem gegenüberliegenden Bereich des Schalldämpfers (5), zu dessen Außenwand (11) hingerückt, angeordnet ist.

12. Kombinierte Abgasnachbehandlungs-/Schalldämpfüngsvorrichtung nach Anspruch 1, **dadurch gekennzeichnet, daß** das Abgasaustrittsrohr (4) im Bereich innerhalb des Schalldämpfers (5) eine Endrohrabsorptionseinrichtung (22) aufweist.

13. Kombinierte Abgasnachbehandlungs-/Schalldämpfungsvorrichtung nach Anspruch 1, **dadurch gekennzeichnet, daß** die NOₓ-Reduktionskatalysatoren (24/1 .... 24/n) und die NH₃-Sperrkatalysatoren (25; 25/1 .... 25/n) durch beschichtete metallische Monolithen mit einer hohen Anzahl - beispielsweise 200-1.600 cpsi - von parallel zueinander durchströmten Kanälen gebildet sind.

14. Kombinierte Abgasnachbehandlungs-/Schalldämpfungsvorrichtung nach Anspruch 1, **dadurch gekennzeichnet, daß** die NOₓ-Reduktionskatalysatoren (24/1 .... 24/n) und die NH₃-Sperrkatalysatoren (25; 25/1 .... 25/n) durch Vollkatalysatoren mit beispielsweise 200 bis 400 cpsi Zelldichte gebildet sind, wobei deren Aktivität durch imprägnierung mit Platin generiert wird.

15. Kombinierte Abgasnachbehandlungs-/Schalldämpfungsvorrichtung nach Anspruch 1,
**dadurch gekennzeichnet, daß** die ablagerungsgefährdeten Innenwandbereiche der Einströmkammer (7) mit einer Al₂O₃-Schutzschicht versehen sind.

16. Kombinierte Abgasnachbehandlungs-/Schalldämpfüngsvorrichtung nach Anspruch 15, **dadurch gekennzeichnet, daß** besonders ablagerungsgefährdete Innenwandsektionen der Einströmkammer (7) zusätzlich mit einem aus einer Abmischung von TiO₂, Al₂O₃ und SiO₂ bestehenden Material beschichtet sind.

17. Kombinierte Abgasnachbehandlungs-/Schalldämpfungsvorrichtung nach Anspruch 1, **dadurch gekennzeichnet, daß** die Wand des Abgaseintrittsrohres (3) im Bereich der Einströmkammer (7) partiell perforiert ist.

18. Kombinierte Abgasnachbehandlungs-/Schalldampfungsvorrichtung nach Anspruch 1, **dadurch gekennzeichnet, daß** im Schalldämpfer (5) innerhalb der Einströmkammer (7) eine parallel und beabstandet zur Zwischenwand (6) angeordnete sowie mit der Schalldämpfer-Außenwand (11) verbundene, viellochig perforierte Stützwand (29) für eine zusätzliche Lagefixierung der NOₓ-Katalysator-Module (24/1 .... 24/n), des Abgaseintrittsrohres (3) und des Abgasaustrittsrohres (4) vorgesehen ist.

19. Kombinierte Abgasnachbehandlungs-/Schalldämpfungsvorrichtung nach Anspruch 7, **dadurch gekennzeichnet, daß** die vordere Stirnwand (9) und die hintere Stirnwand (10) des Schalldämpfers (5) jeweils durch Doppelbleche gebildet und gegebenenfalls durch Ausfüllen des Zwischenraumes zwischen den Doppelblechen mit Edeistahtwolle. Basaltsteinwolle oder dergleichen Dämmmaterial zusätzlich entdröhnt sind.

20. Kombinierte Abgasnachbehandlungs-/Schalldämpfüngsvorrichtung nach Anspruch 7, **dadurch gekennzeichnet, daß** die vordere Stirnwand (9) und hintere Stirnwand (10) jeweils der Formstabilisierung des Schalldämpfers (5) dienende Bombierungen aufweisen.

## Claims

1. Combined exhaust-gas aftertreatment/sound-attenuation device in the exhaust-system branch of an internal combustion engine, particularly a diesel engine of a commercial vehicle such as a truck, bus, with
• a device for catalytic NOx reduction, comprising a urea-decomposition catalytic converter which can be charged with urea as a reducing agent, an NOx-reducing catalytic-converter unit and, if necessary, an NH₃-blocking catalytic-converter unit and
• a silencer with an exhaust-gas inlet pipe leading into it and an exhaust-gas outlet pipe leading out of it,
**characterised by** the combination of a specially designed silencer (5) with a special exhaust-gas duct in it and a special arrangement of the catalytic converters, such that:
• the silencer (5) is barrel-shaped and internally subdivided into a rear inlet chamber (7) and a front outlet chamber (8) by an intermediate wall (6),
• the exhaust-gas inlet pipe (3) leads into the silencer (5) in a manner coaxial or parallel to the longitudinal axis (12) of the silencer (5), penetrates its front outlet chamber (8) and opens into the inlet chamber (7) arranged behind said outlet chamber (8),
• the inlet area (15) of the exhaust-gas outlet pipe (4), which inlet area (15) communicates with the outlet chamber (8) and runs coaxially in respect of the silencer longitudinal axis (12), is arranged dose to the circumferential outer wall (11) of the silencer (5),
• the NOx-reducing catalytic-converter unit (24) is divided into several single NOx catalytic-converter modules (24/1...24/n) which extend parallel to the longitudinal axis (12) of the silencer, are arranged within the inlet chamber (7) in the clear space between the exhaust-gas inlet pipe (3) and the exhaust-gast outlet pipe (4), through which exhaust gases are to be passed from the rear towards the outlet chamber (8) at the front and which are fastened to the intermediate wall (6).

2. Procedure for combined catalytic NOx reduction and sound attentuation of exhaust gas in the exhaust-system branch of an internal combustion engine, particularly a diesel engine of a commercial vehicle such as a truck or bus, characteristed in that as a reducing agent urea in solid or liquid, dissolved form is initially sprayed into the exhaust gas which comes from the internal combustion engine and, if it is necessary to increase the NOx-reducing capability, has already been passed through a pre-oxidising catalytic converter and which exhaust gas thus doted is then passed through a urea-decomposing catalytic converter (23) functioning as an evaporator, a flow mixer, a hydrolytic and NOx-reducing catalytic converter and is supplied to a silencer (5) in which it is conducted by means of an exhaust-gas inlet pipe (3) through a front outlet chamber (8) and is fed into a rear inlet chamber (7) where it is calmed in respect of sound attenuation and flow behaviour, is distributed to several NOx-reducing catalytic-converter modules (24/1 ... 24/n), is passed through them and returned to the front outlet chamber (8) where it is again calmed in respect of sound attenuation and flow behaviour, is, if necessary, passed through at least one NH₃-blocking catalytic converter (25; 25/1...25/n) before and after it enters the outlet chamber (8) and is finally conducted out of the silencer (5) through an exhaust-gas outlet pipe (4) in the catalytically cleaned condition.

3. Combined exhaust-gas aftertreatment/sound-attenuation device according to Claim 1, **characterised in that** the urea-decomposing catalytic converter (23) functioning as an evaporator for the supplied reducing agent, a flow mixer, a hydrolytic and NOx-reducing catalytic converter can be supplied with urea as reducing agent and is located upstream of the silencer (5) in the exhaust-system branch.

4. Combined exhaust-gas aftertreatment/sound-attenuation device according to Claim 1, **characterised in that** the urea-decomposing catalytic converter (23) functioning as an evaporator for the supplied reducing agent, a flow mixer, a hydrolytic and NOx-reducing catalytic converter can be supplied with urea as reducing agent and is arranged in the silencer (5) where it is located within the end area (26) of the exhaust-gas inlet pipe (3), which end area (26) faces the outlet side.

5. Combined exhaust-gas aftertreatment/sound-attenuation device according to Claim 1, **characterised in that** an NH₃-blocking catalytic-converter module (25) is located in the inlet area (15) of the exhaust-gas outlet pipe (4).

6. Combined exhaust-gas aftertreatment/sound-attenuation device according to Claim 1, **characterised in that** the NH₃-blocking catalytic-converter unit (25) is divided into several single NOx catalytic-converter modules (25/1...25/n), each of which is allocated to an NOx catalytic-converter module (24/1...24/n) and, within the housing of said NOx catalytic-converter module (24/1...24/n), is, in respect of the direction of flow of the exhaust gases, arranged downstream of said NOx catalytic-converter module (24/1...24/n).

7. Combined exhaust-gas aftertreatment/sound-attenuation device according to Claim 1, **characterised in that** the barrel-shaped silencer (5) has an approximately rectangular cross-section, an approximately cylindrical outer wall (11), a front end wall (9) and a rear end wall (10), that the intermediate wall (6) and the two end walls (9, 10) are arranged approximately parallel to each other, that the intermediate wall (6) is connected with the outer wall (11) in a gas-tight manner and that the exhaust-gas inlet pipe (3) and the housings of the NOx catalytic-converter modules (24/1 ... 24/n) are rigidly fastened in the orifices (14, 17, 28) of the intermediate wall (6) in a circumferentially gas-tight manner.

8. Combined exhaust-gas aftertreatment/sound-attenuation device according to Claim 7, **characterised in that** the exhaust-gas inlet chamber (3) passes through an orifice (13) in the front end wall (9) of the silencer (5) and through an orifice (14) in the intermediate wall (6) and is rigidly fastened in each of the two orifices (13, 14) in a circumferentially gas-tight manner.

9. Combined exhaust-gas aftertreatment/sound-attenuation device according to Claim 1, **characterised in that** the exhaust-gas outlet pipe (4) with its inlet area (15) is fastened in an orifice (17) of the intermediate wall (6) in a circumferentially gas-tight manner, extends through the inlet chamber (7) and emerges from the rear area of the silencer (5) either through its outer wall (11) or through the rear wall end wall (10) and is fixed in a corresponding orifice (19, 20) in a circumferentially gas-tight manner.

10. Combined exhaust-gas aftertreatment/sound-attenuation device according to Claim 1, **characterised in that** the exhaust-gas outlet pipe (4) exits the silencer (5) at its front end, penetrates with its inlet area (15) an orifice (21) in the front end wall (9) and is rigidly fixed in this orifice (21) in a circumferentially gas-tight manner.

11. Combined exhaust-gas aftertreatment/sound-attenuation device according to Claim 1, **characterised in that** the exhaust-gas inlet pipe (3) is arranged parallel to the longitudinal axis (12) of the silencer (5) in a lower or an upper area, is located close to the outer wall (11) of said silencer (5) and is inserted into it, and that the inlet area (15) of the exhaust outlet pipe (4) runs coaxially to the longitudinal axis (12) of the silencer (5) at the largest possible distance to the exhaust inlet pipe (3) and is arranged at an area of the silencer (5) which area is opposite said exhaust-gas inlet pipe (3) and is dose to the outer wall (11) of said silencer (5).

12. Combined exhaust-gas aftertreatment/sound-attenuation device according to Claim 1, **characterised in that** the exhaust-gas outlet pipe (4) has an end pipe absorption device (22) in the area within the silencer (5).

13. Combined exhaust-gas aftertreatment/sound-attenuation device according to Claim 1, **characterised in that** the NOx-reducing catalytic-converters (24/1 ... 24/n) and the NH₃-blocking catalytic-converters (25; 25/1 ... 25/n) are composed of coated, metallic monoliths with a high number - eg 200-1,600 cpsi - of ducts through which the exhaust gas flows in a parallel manner.

14. Combined exhaust-gas aftertreatment/sound-attenuation device according to Claim 1, **characterised in that** the NOx-reducing catalytic-converters (24/1 ... 24/n) and the NH₃-blocking catalytic-converters (25; 25/1 ... 25/n) are designed as full catalytic converters with a cell density of eg 200 to 400 cpsi, the activity of said full catalytic converters being generated by impregnation with platinum.

15. Combined exhaust-gas aftertreatment/sound-attenuation device according to Claim 1, **characterised in that** the deposit-prone inner wall areas of the inlet chamber (7) are provided with an Al₂O₃ protective layer.

16. Combined exhaust-gas aftertreatment/sound-attenuation device according to Claim 15, **characterised in that** particularly deposit-prone inner wall sections of the inlet chamber (7) are additionally coated with a material consisting of a mixture of TiO₂, Al₂O₃ and SiO₂.

17. Combined exhaust-gas aftertreatment/sound-attenuation device according to Claim 1, **characterised in that** the wall of the exhaust-gas inlet pipe (3) is partially perforated in the area of the inlet chamber (7).

18. Combined exhaust-gas aftertreatment/sound-attenuation device according to Claim 1, **characterised in that** a 4-hole perforated support wall (29) for additionally fixing the NOx-reducing catalytic-converter modules (24/1 ... 24/n), the exhaust-gas inlet pipe (3) and the exhaust-gas outlet pipe (4) is provided, which support wall (29) is arranged in the silencer (5) within the inlet chamber (7), is located parallel and at a distance to the intermediate wall (6) and is connected with the silencer outer wall (11).

19. Combined exhaust-gas aftertreatment/sound-attenuation device according to Claim 7, **characterised in that** the front end wall (9) and the rear end wall (10) of the silencer (5) are each formed by double metal sheets and, if necessary, are additionally dedrummed by the intermediate space between the double metal sheets' being filled with special steel wool, basalt or rock wool or similar material.

20. Combined exhaust-gas aftertreatment/sound-attenuation device according to Claim 7, **characterised in that** the front end wall (9) and the rear end wall (10) are provided with bows designed to stabilise the form of the silencer (5).

## Revendications

1. Dispositif combiné de traitement postérieur des gaz d'échappement et de réduction du bruit des gaz d'échappement dans la ligne d'échappement d'un moteur à combustion interne, en particulier d'un moteur diesel d'un véhicule industriel tel qu'un camion poids lourd, un bus, avec
- un dispositif de réduction catalytique de NOₓ comprenant un pot catalytique de décomposition de l'urée, alimentable en urée comme agent de réduction, une unité de pot catalytique de réduction de NOₓ et, le cas échéant, d'une unité de filtration de NH₃ placée en aval, et
- un silencieux dans lequel pénètre un conduit d'admission des gaz d'échappement et sort un conduit d'échappement des gaz d'échappement,
**caractérisé par** la combinaison d'un silencieux (5) conçu spécialement avec un guidage spécial des gaz d'échappement à l'intérieur et une disposition spéciale des pots catalytiques, de la manière suivante :
- Le silencieux (5) est réalisé en forme de tonneau et est divisé à l'intérieur par le biais d'une paroi intermédiaire (6) en une chambre d'admission arrière (7) et une chambre d'échappement avant (8),
- Le conduit d'admission des gaz d'échappement (3) pénètre dans le silencieux coaxialement ou parallèlement par rapport à l'axe longitudinal (12) du silencieux (5), pénètre dans la chambre d'échappement avant (8) de celui-ci et débouche dans la chambre d'admission (7) disposé à l'arrière,
- La partie admission (15) du conduit d'échappement des gaz d'échappement (4), communiquant avec la chambre d'échappement (8) et située coaxialement par rapport à l'axe longitudinal du silencieux (12), est disposée près de la paroi extérieure (11) entourant le silencieux,
- L'unité de pot catalytique de réduction de NOₓ (24) est divisée en plusieurs modules individuels de pot catalytique de NOₓ (24/1....24/n) qui s'étendent parallèlement par rapport à l'axe longitudinal du silencieux (12), sont disposés de manière répartie à l'intérieur de la chambre d'admission (7) dans un espace libre entre le conduit d'admission des gaz d'échappement (3) et le conduit d'échappement des gaz d'échappement (4), passent de l'arrière vers l'avant en direction de la chambre d'échappement (8) et sont fixés à la paroi intermédiaire (6).

2. Procédé combiné de réduction catalytique de NOₓ et de réduction du bruit des gaz d'échappement dans la ligne d'échappement d'un moteur à combustion interne, en particulier d'un moteur diesel d'un véhicule industriel tel qu'un camion poids lourd, d'un bus, **caractérisé par le fait que**, dans les gaz d'échappement provenant du moteur à combustion interne, conduits déjà, le cas échéant, à travers un pot catalytique à préoxydation afin d'accroître la capacité de réduction de NOₓ, de l'urée est injectée tout d'abord comme agent de réduction sous forme solide ou liquide dissoute, qu'ensuite, ces gaz d'échappement dotés ainsi sont conduits à travers un pot catalytique à décomposition de l'urée (23) servant d'évaporateur, de mélangeur de flux et de pot catalytique à hydrolyse et de réduction de NOₓ et guidés vers un silencieux (5), sont conduits ici dans celui-ci de manière canalisée au moyen d'un conduit d'admission des gaz d'échappement (3) à travers une chambre d'admission avant (8) et stockés dans une chambre d'échappement arrière (7) et, à cet endroit, sont stabilisés en matière de réduction du bruit ainsi que de flux des gaz, puis refoulés de manière répartie vers plusieurs modules de pot catalytique de réduction de NOₓ (24/1...24/n) à travers ceux-ci dans la chambre d'échappement avant (8) et, à cet endroit, sont stabilisés une nouvelle fois en matière de la réduction du bruit et de flux des gaz, traverse avant ou après l'admission dans la chambre d'échappement (8), le cas échéant, encore au moins un pot catalytique de filtration de NH₃ (25 ; 25/1 ... 25/n) et, pour finir, sont évacués, filtrés par catalyse, hors du silencieux (5) de manière canalisée par le conduit d'échappement des gaz d'échappement (4).

3. Dispositif combiné de traitement postérieur des gaz d'échappement et de réduction du bruit des gaz d'échappement selon la revendication 1, **caractérisé par le fait que** le pot catalytique de décomposition de l'urée (23) alimentable en urée comme agent de réduction, servant d'évaporateur pour l'agent de réduction injecté, de mélangeur de flux, de pot catalytique à hydrolyse et de pot catalytique à réduction de NOₓ est disposé dans la ligne d'échappement dans le sens du flux en amont du silencieux (5).

4. Dispositif combiné de traitement postérieur des gaz d'échappement et de réduction du bruit des gaz d'échappement selon la revendication 1, **caractérisé par le fait que** le pot catalytique de décomposition de l'urée (23) alimentable en urée comme agent de réduction, servant d'évaporateur pour l'agent de réduction injecté, de mélangeur de flux, de pot catalytique à hydrolyse et de pot catalytique à réduction de NOₓ, est disposé dans le silencieux (5), à cet endroit, dans la partie terminale côté échappement (26) du conduit d'échappement des gaz d'échappement (3).

5. Dispositif combiné de traitement postérieur des gaz d'échappement et de réduction du bruit des gaz d'échappement selon la revendication 1, **caractérisé par le fait qu'**un module catalytique de filtration de NH₃ (25) est disposé dans la partie admission (15) du conduit d'échappement des gaz d'échappement (4)

6. Dispositif combiné de traitement postérieur des gaz d'échappement et de réduction du bruit des gaz d'échappement selon la revendication 1, **caractérisé par le fait que** l'unité de pot catalytique de filtration de NH₃ (25) est divisée en plusieurs modules individuels de pot catalytique de filtration de NH₃ (25/1... 25/n) dans le cas desquels chacun est attribué à un module de pot catalytique de NOₓ (24/1 ... 24/n) et est disposé dans le sens du flux en aval par rapport à celui-ci dans son carter.

7. Dispositif combiné de traitement postérieur des gaz d'échappement et de réduction du bruit des gaz d'échappement selon la revendication 1, **caractérisé par le fait que** le silencieux (5) en forme de tonneau présente une section transversale quasi rectangulaire, une paroi extérieure (11) quasi cylindrique, une paroi frontale avant (9) et une paroi frontale arrière (10), **par le fait que** la paroi intermédiaire (6) et les deux parois frontales (9, 10) sont disposées à peu près parallèlement les unes par rapport aux autres, **par le fait que** la paroi intermédiaire (6) est reliée à la paroi extérieure de manière étanche aux gaz et **par le fait que** le conduit d'admission des gaz d'échappement (3) et le carter des modules de pot catalytique de NOₓ (24/1... 24/n) sont fixés de manière fixe dans des ouvertures (14, 17, 28) de la paroi intermédiaire (6) à l'intérieur de manière étanche sur toute la circonférence.

8. Dispositif combiné de traitement postérieur des gaz d'échappement et de réduction du bruit des gaz d'échappement selon la revendication 7, **caractérisé par le fait que** le conduit d'admission des gaz d'échappement (3) passe par une ouverture (13) dans la paroi frontale avant (9) du silencieux (5) ainsi que par une ouverture (14) dans la paroi intermédiaire (6) et est fixé de manière fixe dans chacune des ouvertures (13, 14) de manière étanche aux gaz sur toute la circonférence.

9. Dispositif combiné de traitement postérieur des gaz d'échappement et de réduction du bruit des gaz d'échappement selon la revendication 1, **caractérisé par le fait que** le conduit d'échappement des gaz d'échappement (4) est fixé avec sa partie admission (15) de manière étanche aux gaz sur toute la circonférence dans une ouverture (17) de la paroi intermédiaire (6), s'étend ensuite pour passer dans la chambre d'admission (7) et ressort, fixé dans une ouverture correspondante (19, 20) de manière étanche aux gaz sur toute la circonférence, dans la partie arrière du silencieux (5) de celui-ci soit par sa paroi extérieure (11) soit par la paroi frontale arrière (10).

10. Dispositif combiné de traitement postérieur des gaz d'échappement et de réduction du bruit des gaz d'échappement selon la revendication 1, **caractérisé par le fait que** le conduit d'échappement des gaz d'échappement (4) ressort vers l'avant du silencieux (5), pénètre, avec sa partie admission (15), dans une ouverture (21) réalisée dans la paroi frontale avant (9) et est fixé de manière fixe et étanche aux gaz sur toute la circonférence.

11. Dispositif combiné de traitement postérieur des gaz d'échappement et de réduction du bruit des gaz d'échappement selon la revendication 1, **caractérisé par le fait que** le conduit d'admission des gaz d'échappement (3) passe parallèlement à l'axe longitudinal (12) du silencieux (5) dans une partie inférieure ou supérieure dans celui-ci, près de sa paroi extérieure (11) et est inséré dedans et **par le fait que** la partie admission (15) du conduit d'échappement des gaz d'échappement, laquelle passe coaxialement par rapport à l'axe longitudinal (12) du silencieux (5), est disposée à une distance la plus loin possible du conduit d'admission des gaz d'échappement (3) et passe près de cette partie opposée du silencieux (5) par rapport à la paroi extérieure (11).

12. Dispositif combiné de traitement postérieur des gaz d'échappement et de réduction du bruit des gaz d'échappement selon la revendication 1, **caractérisé par le fait que** le conduit d'échappement des gaz d'échappement (4) présente, dans la partie à l'intérieur du silencieux (5), un dispositif absorbant au niveau de la section terminale (22).

13. Dispositif combiné de traitement postérieur des gaz d'échappement et de réduction du bruit des gaz d'échappement selon la revendication 1, **caractérisé par le fait que** les pots catalytiques de réduction de NOₓ (24/1...24/n) et les pots catalytiques de filtration de NH₃ (25 ; 25/1... 25/n) sont composés de monolithes métalliques recouverts d'un traitement de surface, avec un nombre élevé - par exemple 200-1.600 cpsi - de canaux traversés parallèlement les uns par rapport aux autres.

14. Dispositif combiné de traitement postérieur des gaz d'échappement et de réduction du bruit des gaz d'échappement selon la revendication 1, **caractérisé par le fait que** les pots catalytiques de réduction de NOₓ (24/1... 24/n) et les pots catalytiques de filtration de NH₃ (25 ; 25/1... 25/n) sont composés de pots catalytiques complets avec une densité de cellule, par exemple, de 200 à 400 cpsi, auquel cas leur activité est générée par l'imprégnation avec du platine.

15. Dispositif combiné de traitement postérieur des gaz d'échappement et de réduction du bruit des gaz d'échappement selon la revendication 1, **caractérisé par le fait que** les parties de la paroi intérieure de la chambre d'admission (7), menacées par des dépôts, sont recouvertes d'une couche de protection de Al₂O₃.

16. Dispositif combiné de traitement postérieur des gaz d'échappement et de réduction du bruit des gaz d'échappement selon la revendication 15, **caractérisé par le fait que** les sections de la paroi intérieure de la chambre d'admission (7), particulièrement menacées par des dépôts, sont recouvertes en supplément d'un matériau composé d'un mélange de TiO₂, de Al₂O₃ et de SiO₂.

17. Dispositif combiné de traitement postérieur des gaz d'échappement et de réduction du bruit des gaz d'échappement selon la revendication 1, **caractérisé par le fait que** la paroi du conduit d'admission des gaz d'échappement (3) est partiellement perforée au niveau de la chambre d'admission (7).

18. Dispositif combiné de traitement postérieur des gaz d'échappement et de réduction du bruit des gaz d'échappement selon la revendication 1, **caractérisé par le fait que**, dans le silencieux (5) à l'intérieur de la chambre d'admission (7), une paroi d'appui disposée parallèlement à la paroi intermédiaire (6) et distante de celle-ci ainsi que reliée à la paroi extérieure du silencieux (11) et perforée par de nombreux trous est prévue pour permettre une fixation fixe supplémentaire des modules de pot catalytique de NOₓ (24/1...24/n), du conduit d'admission des gaz d'échappement (3) et du conduit d'échappement des gaz d'échappement.

19. Dispositif combiné de traitement postérieur des gaz d'échappement et de réduction du bruit des gaz d'échappement selon la revendication 7, **caractérisé par le fait que** la paroi frontale avant (9) et la paroi frontale arrière (10) du silencieux (5) sont formées chacune d'une double tôle et, le cas échéant, sont insonorisées par le remplissage de l'espace intermédiaire entre la double tôle avec de la laine d'acier inoxydable, de laine de basalte ou d'un matériau insonorisant similaire.

20. Dispositif combiné de traitement postérieur des gaz d'échappement et de réduction du bruit des gaz d'échappement selon la revendication 1, **caractérisé par le fait que** la paroi frontale avant (9) et la paroi frontale arrière (10) présentent chacune des surfaces bombées dans le but de stabiliser la forme du silencieux (5).
